(19) Europäisches Patentamt
European Patent Office
Office européen des brevets

(11) Publication number: **0 304 134 A2**

# (12) EUROPEAN PATENT APPLICATION

(21) Application number: 88201757.7

(22) Date of filing: 17.08.88

(51) Int. Cl.4: C08L 77/06 , C08K 3/00 , C08K 3/24

(30) Priority: 18.08.87 JP 204741/87

(43) Date of publication of application: 22.02.89 Bulletin 89/08

(84) Designated Contracting States: AT BE CH DE ES FR GB IT LI NL SE

(71) Applicant: STAMICARBON B.V.
Mijnweg 1
NL-6167 AC Geleen(NL)

(72) Inventor: Tanabe, Takayoshi
Shofuryo Morigayama-1
Yokkaichi-shi Mieken 510(JP)
Inventor: Saka, Mituo
628 Kokubu-cho
Suzuka-shi Mieken 513(JP)
Inventor: Tsuchikawa, Shuji
10-1, Mitakidai 1-chome
Yokkaichi-shi Mieken 510(JP)
Inventor: Kimura, Shinichi
12,6, Mitakidai 4-chome
Yokkaichi-shi, 510(JP)

## (54) Magnetic resin composition.

(57) The invention relates to a magnetic resin composition comprising low molecular polytetramethylene adipamide (100 parts and 50-500 part magnetic powder, and optionally 1 to 90 parts of the polyamide is replaced by a modifier rubber. The composition has excellent moldability, mechanic and magnetic properties.

EP 0 304 134 A2

# MAGNETIC RESIN COMPOSITION

The present invention relates to a novel magnetic resin composition having excellent resistance to heat, mechanical and magnetic properties and moldability. More particularly it relates to a magnetic resin composition comprising polytetramethylene adipamide (nylon 4.6) and a magnetic powder.

A magnetic resin composition comprising nylon 4.6 and a magnetic powder is known from the unexamined Japanese Patent Application JP-A-61 188464. Small amounts of ethylenebisstearylamide, 0.1-1.0 % wt, have to be added to the resin composition to give sufficient moldability. In the absense of the ethylenebisstearamide a composition of nylon 4.6, 100 parts, and ferrite, 150 parts, cannot be molded in articles. (comparitive example 2 of citation). However for some unknown reason the presence of substances such as the ethylenebisstearamide may negatively influence the magnetic properties of the articles molded from the compositions of JP-A-61188464. For this reason compositions not containing these moldability improving substances are preferred.

It is therefore the object of the present invention to obtain a magnetic resin composition comprising nylon 4.6 and a magnetic powder that, in the absence of moldability improving additives, even at high contents of magnetic powder, possesses a good moldability. It has been found now that by using low molecular weight polytetramethyleneadipamide, magnets containing high contents of magnetic powder can be molded, without the use of moldability improving additives.

Surprisingly the articles show good mechanical properties, notwithstanding the low molecular weight of the polytetramethyleneadipamide.

The magnetic resin composition of the present invention is characterized in that the polytetramethylene adipamide has a relative viscosity of between 2.0 and 3.0 as measured in a solution of 1 gram in 100 ml wt.% sulfuric acid at 30¤C.

Polytetramethylene adipamide useful for the present invention may be produced by condensation-polymerization of tetramethylenediamine and adipic acid, and is composed of repeting units represented by the following formula:

$$-(HN-(CH_2)_4-NH-CO-(CH_2)_4-CO)_n-$$

Nylon 4,6 is preferably used in the form of a powdered resin. Its relative viscosity should be below 3.0, otherwise the melt viscosity of the composition is too high, resulting in problems in processing and/or decrease of the magnetic properties. A relative viscosity of below 2.0 results in insufficient mechanical strength of the molded articles. Preferably the relative viscosity is between 2.0 and 2.7, more preferably between 2.2 and 2.5.

The magnetic powder for the present invention can be any material that can be processed with the polyamide and can for instance be chosen from the group of ferrites, alnico, Fe-Cr-Co-alloys and rare earth elements. The size of the particles is preferably for at least 80% (wt) of the particles of between 0.5 and 5 µm, more preferably for 90% (wt) of the particles.

The quantity of magnetic powder should be in the range of between 50 and 500 weight parts per 100 weight parts of nylon 4.6. Less that 50 parts will produce insufficient magnetic properties, over 500 weight parts is difficult to mold.

Additives may be used to further improve the properties of the composition, for instance, heat stabilizers, coupling agents and pigments or additives to improve processing.

High molecular weight nylon 4,6 is characterized by its relatively high impact resistance over other polyamides. However by using low molecular weight nylon 4,6 in the composition this superiour property drops to the level of the more commonly used polyamides, for instance nylon 6 and nylon 6,6.

It is a further object of the present invention to improve this impact resistance by incorporating a rubbery compound in the magnetic composition, without decreasing the superior heat resistance and magnetic properties. Thereto 1 to 70 parts of the nylon 4,6 of the composition is replaced by a rubbery compound which is modified by a compound having at least one functional group chosen from the epoxy, acid anhydride, carboxyl and amine groups. If more than 70 parts by weight of rubbery compound are present, the heat resistance, expressed as the heat deflection temperature (HDT), will be influenced negatively, less than 1 part by weight will give no improvement of the impact resistance. Preferably 2 to 40 parts and more preferably 3 to 20 parts by weight nylon 4,6 are replaced by the modified rubbery compound.

Polymers usefull as rubbery compound are elastomers, thermolastic polymers and graft copolymers of a styrene monomer and the monomers of the above mentioned elastomers or thermolastic polymers. They

may be used alone or in combination.

More specifically, the elastomeric polymers include polydienes such as polybutadiene, styrene-butadiene copolymer, acrylonitrile-butadiene copolymer and polyisopropene; polyolefinic elastomers such as ethylene-propylene copolymer and ethylene-propylene-polyene copolymer; and acrylic polymers such as polyacrylic acid ester.

The thermolastic polymers include for instance styrene-butadiene block copolymers, hydrogenated styrene-butadiene block-copolymers, styrene-grafted ethylene-propylene elastomers, thermoplastic polyester elastomers, ethylene-based ionomer resins, polyether-amide block copolymers.

The graft copolymers include for instance latex and elastomer like polymers, emulsion-grafted thermolastic polymers with a styrene monomer, and the polymers prepared by bulk polymerization, solution polymerization or suspension polymerization of the elastomeric polymer or thermolastic polymer dissolved in a styrenic monomer solvent.

The rubbery compound is modified in the present invention, by a compound having at least one functional group selected from epoxy-, acid anhydride, carboxyl and amino group. The modified rubbery compound may be obtained by one of the following methode:

1. the rubbery compound is produced in the presence of a vinyl compound, chain transfer agent or polymerization initiator having the above-mentioned functional group, such as an unsaturated compound having an epoxy, acid anhydride-, carboxyl- or amine group; chain transfer agent having an carboxyl group; and polymerization initiator having an amino group, or

2. a vinyl compound, chain transfer agent or polymerization initiator having the above-mentioned functional group is added to the rubbery compound.

Approach 1 may be effected using a known polymerization method, such as emulsion, suspension, solution or bulk polymerization. The approach 2, on the other hand, may be effected by kneading the mixture with the aid of an extruder, Banbury mixer or kneader, in the presence of a peroxide, as necessary.

Any known organic peroxide may be used for the above-mentioned kneading process. Peroxides useful for the above process include 2,5-dimethyl-2,5-di(tert-butylperoxy)hexine-3, 2,5-dimethyl-2,5-di(tert-butylperoxy)hexane, 2,2′-bis(tert-butyl peroxy)-p-diisopropylbenzene dicumyl peroxide, di-tert-butyl peroxide, tert-butylperoxybenzoate, 1,1-bis(tert-butylperoxy)-3,3,5-trimethylcyclohexane, 2,4-dichlorobenzoylperoxide, and azo-bis-isobutylonitrile. Preferably the peroxides are 2,5-dimethyl-2,5-di(tert-butylperoxy)hexane and 2,5-dimethyl-2,5-di(tert-butylperoxy)hexine-3.

The quantity of the above peroxides is in the range of from 0.05 to 1 weight parts per 100 weight parts of the rubbery compound, preferably from 0.1 to 1 weight part.

The unsaturated compounds having an epoxy group, useful for the present invention, include unsaturated epoxy compounds, such as glycidyl esters, glycidyl ethers, epoxy alkenes, p-glycidyl styrenes which are represented by the following formula (I), (II) or (III):

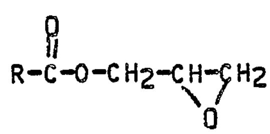

(I)

where, R stands for hydrocarbon group having an ethylene-type unsaturated bond and from 2 to 18 carbon atoms,

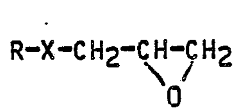

(II)

where, R stands for hydrocarbon group having an ethylene-type unsaturated bond and from 2 to 18 carbon atoms, and X for $-CHO_2$,

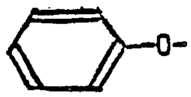 or 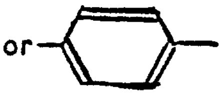 ,

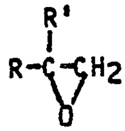 (III)

where, R stands for a hydrocarbon group having an ethylene-type unsaturated bond and from 2 to 18 carbon atoms, and R′ for hydrogen atom or methyl group.

More concretely, they include glycidyl acrylate, glycidyl methacrylate, itaconic acid glycidyl esters, butenecarboxylic esters, allylglycidyl ethers, 2-methylallglycidyl ethers, 2-methylallylglycidyl ethers, styrene-p-glycidyl ethers, 3,4-epoxybutene, 3,4-epoxy-3-methyl-1-butene, 3,4-epoxy-1-pentene, 3,4-epoxy-3-methylpentene, 5,6-epoxy-1-hexene, vinylcyclohexene monoxide and p-glycidyl styrene. They may be used alone or in combination.

The unsaturated compounds having acid anhydride groups, useful for the present invention, include maleic acid anhydride, itaconic acid anhydride, butenyl succinic acid anhydride and tetrahydrophtalic acid anhydride. Preferably the unsaturated compound is maleic acid anhydride.
They may be used alone or in combination.

The unsaturated compounds having a carboxyl group, useful for the present invention, include acrylic acid, methacrylic acid, crotonic acid, cinnamic acid, itaconic acid and maleic acid. Preferably the unsaturated compounds are acrylic acid and methacrylic acid. They may be used alone or in combination.

The unsaturated compounds having amino group, useful for the present invention, are for instance vinyl-monomers having at least one amine or substituted amino group represented by the following general formula:

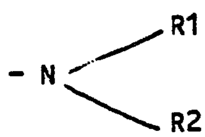

where, $R_1$ stands for hydrogen atom, a methyl or ethyl group; $R_2$ for a hydrogen atom an alkyl group having from 1 to 12 carbon atoms, an alkanoyl group having from 2 to 12 carbon atoms, a phenyl group having 6 to 12 carbon atoms, or derivatives thereof. More concretely, they include alkyl ester derivatives of acrylic or methacrylic acid, such as aminoethyl acrylate, propylaminoethyl acrylate, dimethylaminoethyl methacrylate, aminopropyl methacrylate and cyclohexylaminoethyl methacrylate; vinyl amine type derivates, such as N-vinyl diethyl amine and N-acetylvinyl amine; allyl amine derivatives, such as allyl amine, methacryl amine and N-methyllalyl amine; acrylamide derivatives, such as acrylamide and N-methylallyl amide; and p-aminostyrene. Allyl amine, aminoethyl methacrylate, aminopropyl methacrylate and aminostyrene are more prefered, because they are commercially available. They may be used alone or in combination.

The chain transfer agents having carboxyl group, useful for the present invention, are for instance thioglycolic acid, thiomalic acid and mercaptopropionic acid.

The chain transfer agents having an amino group, useful for the present invention, are for instance mercaptomethyl amine, β-mercaptoethyl amine, γ-mercapto-propyl amine, N-(β-mercaptoethyl amine, γ-mercapto-propyl, N-(β-mercaptoethyl)-N-phenyl amine, N-(β-mercaptoethyl)-N- ethyl amine, N-(β-mercaptoethyl)-N-phenyl amine, N-(β-mercaptoethyl)-N-(β-mercaptoethyl)-N-phenyl amine, N-(β-mercaptoethyl)-N-cyclohexyl amine, bis-(4-aminophenyl) disulfide, bis-(2-aminophenyl) disulfide, bis-(3-aminophenyl) disulfide, p-mercaptoaniline, o-mercaptoaniline, m-mercaptoaniline, and chloric acid slats thereof. Preferably the transfer agents are β-mercaptoethyl amine, γ-mercaptopropyl amine, chloric acid salt of β mercaptoethyl amine, chloric acid salt of γ-mercaptopropyl amine and bis-(4-aminophenyl) disulfide.

The polymerization initiators having a carboxyl group, useful for the present invention, are the azo compounds and peroxides having a carboxyl group.

Preferably the azo compounds having a carboxyl group represented by the following general formula are used:

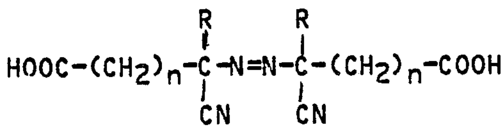

where, R stands for a hydrogen atom or a methyl or ethyl group, and n is an integer of 1 or 2. Azobiscyanovalerianic acid and azobiscyanopropionic acid are preferred.

The peroxide having a carboxyl group, useful for the present invention, is succinic acid peroxide.

Polymerization initiators having a carboxyl group, useful for the present invention, are
α,α′-azobis(γ-amino-α,α′-dimethylvaleronitrile),
α,α′-azobis(γ-methylamino-α,γ-dimethylvaleronitrile),
α,α′-azobis(γ-ethylamino-α,γ-dimethylvaleronitrile),
α,α′-azobis(γ-propylamino-α,γ-dimethylvaleronitrile),
α′-azobis(γ-dimethylamino-α,γ-dimethylvaleronitrile),
α′-azobis(α-dipropylamino-α,γ-dimethylavaleronitrile),
and p-aminobenzoylperoxide, α,α′-azobis (α-amino-α,γ-dimethylvaleronitrile) is preferred.

The styrene monomers, useful for the present invention, are styrene, β-methylstyrene, methylstyrene, vinylxylene, monochlorostyrene, dichlorostyrene, monobromostyrene, dibromostyrene, p-tert-butylstyrene, ethylstyrene and vinylnaphtalene. Styrene is preferred. They may be used alone or in combination.

Other vinyl monomers copolymerizable with styrene are also useful for the present invention. They include acrylic acid ester, methacrylic acid ester, acrylonitrile and methacrylonitrile.

The quantity of the compound having at least one functional group selected from epoxy, acid anhydride, carboxyl and amino groups is in the range of from 0.01 to 30 weight parts per 100 weight parts of the rubbery compound, preferably from 0.1 to 20 weight parts, more preferably from 0.5 to 10 weight parts. The magnetic resin composition will have insufficient resistance to shocks, to an extent that it may delaminate from the bulk body, when it is below 0.01 weight parts, and also insufficient resistance to shocks when it is above 30 weight parts.

There is no limitation on the methods for mixing the nylon 4.6 and the magnetic powder. A preferred method is one in which the powdered or pelletized nylon 4,6 is mixed with the magnetic powder by means of a Henschel mixer, and the mixture is further melt-mixed by means of an extruder and processed into articles by for instance extrusion or injection molding. The article will posses better magnetic properties, when shaped in a magnetic field.

The magnetic resin composition is produced by one of the following methods:

(1) nylon 4,6 and the magnetic powder are melt-mixed with the modified rubbery compound,

(2) nylon 4,6, the rubbery compound and the compound having at least one functional group selected from epoxy, and anhydride, carboxyl and amino groups are melt-mixed in the presence of an organic peroxide, if necessary, and the mixture is then melt-mixed with the magnetic powder, and

(3) nylon 4,6, the rubbery compound, the magnetic powder and the functional group containing compound are melt-mixed simultaneously in the presence of an organic peroxide, if necessary.

Of the above, the method (1) is the most preferable. In one of the preferred embodiments of the present invention, the rubbery compound is modified with the functional group containing compound and the modified rubber polymer is melt-mixed with nylon 4,6 to produce a rubber-reinforced polymer, which is then melt-mixed with the magnetic powder, to produce the magnetic resin composition of the present invention.

In any of the above methods, the melt-mixing process is effected by mains of a known mixer, such as an extruder, Banburry mixer, kneader and roller.

The present invention is illustrated in more detail by the following examples and comparitive examples, but by no means limited thereto. It should be understood that various changes and modifications may be made therein without departing of the scope of the present invention.

Examples and comparitive examples

The following methods have been used for the determination of the mechanical and magnetic properties of the composition.

Flexural strength ASTM D-790
Flexural modulus ASTM D-790

Heat resistance (HDT) load of 18.6 kg/m$^2$ ASTM D-648
Impact resistance at 23¤C, 1/4 inch, notched ASTM D-256
Magnetic properties are represented by the maximum energy product $(HB)_{max}$ of the magnetic induction (flux density) and the magnetic field strength. (Gauss. Oersted).

Preparation of the compositions

Materials: Nylon 4,6 obtained from DSM, $\eta_{rel}$ of between 1.4 and 3.5. Strontium ferrite, particle size of between 0.5 and 5 µm.
Modified rubbery compounds: were prepared from commercial ethylenepropylene rubber by mixing with 1% by weight maleic acid anhydride and 0.3 % by weight of an organic peroxide, (Karijahera AD, supplied by Kayaki Nuro, Japan), and thermally treating during 4 minutes at 200¤C in a 55 mm-diameter single screw extruder at 30 rpm. The product was extracted during 2 hours with boiling acetone. The graft rate was determined by infrared spectroscopy (see Table 1).

The magnetic resin compositions were produced by melt mixing the nylon 4,6, the strontium ferrite and if required the (modified) rubbery compound in the propertions shown in Table 2. (Examples 1 through 11 Comparitive examples 1 through 12) in a monodirectional double screw extruder at a barrel temperature of between 280 and 330¤C to produce pellets of the magnetic resin composition. The pellets were used for injection molding under a 15000 oersted magnetic field into samples, dimensions of samples 127 x 12.7 x 3.2 mm strips and 20 mm diameter 10 mm high disks. Mechanical and magnetic properties are shown in Table 3.

In example 12, the nylon 4,6, the rubbery compound and the strontium ferrite were first mixed and the maleic acid anhydride and organic peroxide added thereafter and consequently melt-mixed in the manner described above.

In example 13, the nylon 4.6, the rubbery compound, the maleic acid anhydride and the peroxide were first melt mixed as described earlier and the strontium ferrite was added thereafter in an identical procedure.

Table 1

| Composition of modified rubbery compounds | | | |
|---|---|---|---|
| | Rubbery compounds | Monomers types | Rate (%) |
| B-1 | Ethylene-propylene rubber (JSR EP-02P, supplied by Japanese Synthetic Rubber) | Maleic acid anhydride | 0.5 |
| B-2 | Ethylene-propylene rubber (JSR EP-02P, supplied by Japan Synthetic Rubber) | Maleic acid anhydride | 1.0 |
| B-3 | Ethylene-propylene rubber (JSR EP-941P, supplied by Japan Synthetic Rubber) | Maleic acid anhydride | 1.0 |
| B-4 | Ethylene-propylene rubber (JSR EP-02P, supplied by Japan Synthetic Rubber) | | |
| B-5 | Ethylene-propylene rubber (JSR TR-2000, supplied by Japan Synthetic Rubber) | Maleic acid anhydride | 1.0 |
| B-6 | Ethylene-propylene rubber (JSR EP-02P, supplied by Japan Synthetic Rubber) | Glycidyl methacrylate (2% wt) | 1.0 |

Table 2

Composition (weights parts)

| | Nylon 4.6 | | Rubbery compound (modified) | | Strontium |
|---|---|---|---|---|---|
| | Relative viscosity | Quantity | Polymer type | Quantity | ferrite |
| Example 1 | 2.3 | 100 | -- | -- | 200 |
| 2 | " | 100 | -- | -- | 300 |
| 3 | " | 100 | -- | -- | 400 |
| Comparitive Examples | | | | | |
| 1 | 2.3 | 100 | -- | -- | 40 |
| 2 | " | 100 | -- | -- | 600 |
| 3 | 3.5 | 100 | -- | -- | 300 |
| 4 | 1.4 | 100 | -- | -- | 300 |
| 5 | 2.2* | 100 | -- | -- | 300 |
| 6 | 2.7** | 100 | -- | -- | 300 |
| 7 | 1.7*** | 100 | -- | -- | 300 |
| Example 4 | 2.3 | 80 | B-1 | 20 | 300 |
| 5 | 2.3 | 80 | B-2 | 20 | 300 |
| 6 | 2.3 | 80 | B-3 | 20 | 300 |
| 7 | 2.3 | 95 | B-3 | 5 | 300 |
| 8 | 2.3 | 80 | B-3 | 20 | 200 |
| 9 | 2.3 | 80 | B-3 | 20 | 400 |
| 10 | 2.3 | 80 | B-5 | 20 | 300 |
| 11 | 2.3 | 80 | B-6 | 20 | 300 |
| 12 | 2.3 | 80 | JSREP-02P | 20 | 300 |
| 13 | 2.3 | 80 | JSREP-02P | 20 | 300 |
| Comparitive Examples | | | | | |
| 8 | 2.3 | 80 | B-4 | 20 | 300 |
| 9 | 2.3 | 20 | B-3 | 80 | 300 |
| 10 | 2.3 | 80 | B-3 | 20 | 30 |
| 11 | 2.3 | 80 | B-3 | 20 | 700 |
| 12 | -- ***** | 80 | B-3 | 20 | 300 |

*) nylon 6
**) nylon 6.6
***) nylon 12 relative viscosity determined on a 0.5% solution in metacresol

Table 3

Properties

| | | Flexural strength (kg/cm²) | Modulus | Impact resistance (kg cm/cm) | Resistance to heat HDT (¤C) | Maximum energy product (MGOe) |
|---|---|---|---|---|---|---|
| Example | 1 | 2.030 | 126.000 | | 283 | 1.6 |
| | 2 | 2.260 | 132.000 | 3 | 285 | 1.7 |
| | 3 | 2.440 | 121.000 | | 280 | 1.5 |
| Comparative Examples | | | | | | |
| | 1 | 1.800 | 72.000 | | 282 | 0.7 |
| | 2 | -- | -- | | -- | -- |
| | 3 | 2.580 | 134.000 | | 281 | 1.1 |
| | 4 | 1.310 | 92.000 | | 279 | 1.7 |
| | 5 | 1.650 | 102.000 | | 212 | 1.5 |
| | 6 | 1.960 | 116.000 | 2.5 | 252 | 1.4 |
| | 7 | 1.120 | 96.000 | | 177 | 1.8 |
| | 4 | -- | -- | 6 | 220 | 1.6 |
| | 5 | -- | -- | 8 | 215 | 1.5 |
| | 6 | -- | -- | 8 | 230 | 1.6 |
| | 7 | -- | -- | 5 | 265 | 1.7 |
| | 8 | -- | -- | 11 | 235 | 1.5 |
| | 9 | -- | -- | 7 | 230 | 1.4 |
| | 10 | -- | -- | 8 | 210 | 1.5 |
| | 11 | -- | -- | 7 | 220 | 1.5 |
| | 12 | -- | -- | 9 | 230 | 1.7 |
| | 13 | -- | -- | 7 | 230 | 1.6 |
| Comparative Examples | | | | | | |
| | 8 | -- | -- | 3 | 180 | 1.2 |
| | 9 | -- | -- | 5 | 110 | 0.5 |
| | 10 | -- | -- | 16 | 210 | 0.3 |
| | 11 | -- | -- | -- | -- | -- **** |
| | 12 | -- | -- | 7 | 160 | 1.6 |

**** not procesable

***** Commercial nylon 6 (Amilan R CM1007, supplied by Toray) was used as polyamide.

## Claims

1. Magnetic resin composition comprising 100 parts by weight polytetramethylene-adipamide and 50 to 500 parts by weight of a magnetic powder, characterized in that the polytetramethylene adipamide has a relative viscosity of between 2.0 and 3.0, measured on a solution of 1 gram in 100 ml 97 wt.% sulfuric acid at 30¤C.

2. Magnetic resin composition according to claim 1 characterized in that from 1 to 70 parts by weight of the polytetramethylene adipamide is replaced by a rubbery compound.

3. Magnetic resin composition according to claim 2 characterized in that the rubbery compound is modified by a compound having at least one functional group chosen from epoxy, acid anhydride, carboxyl and amino groups.

4. Method for the production of the magnetic resin composition according to claim 3 by one of the following methods characterized in that said polytetramethylene-adipamide and magnetic powder are melt mixed with said modified rubbery compound or that said polytetramethylene adipamide, said rubbery compound and said compound having at least one functional group are first meltmixed and consequently meltmixed with said magnetic powder or that said polytetramethyladipamide, magnetic powder, rubbery compound and compound having at least one functional group are melt-mixed simultaneously.

5. Method according to claim 4 by meltmixing said polytetramethylene adipamide and magnetic powder with said modified rubbery compound.

6. Article formed from a resin composition as claimed in anyone of the claims 1-3 or from a composition obtained by using the method as claimed in claim 4 and 5.